# FASCICULE DE BREVET EUROPEEN

(11) **EP 3 171 511 B1**
(45) Date de publication et mention de la délivrance du brevet: **18.07.2018**
(21) Numéro de dépôt: 16199189.8
(22) Date de dépôt: 16.11.2016
(51) Int. Cl.: H02S 50/00

(54) **PROCEDE ET SYSTEME DE DETERMINATION DE CARACTERISTIQUES COURANT-TENSION D'UNE INSTALLATION PHOTOVOLTAÏQUE**
VERFAHREN UND SYSTEM ZUR MESSUNG DER STROM-SPANNUNG CHARACTERISTIK EINER PHOTOVOLTAISCHEN ANLAGE
METHOD AND SYSTEM TO DETERMINE THE CURRENT-VOLTAGE CHARACTERISTICS OF A PHOTOVOLTAIC INSTALLATION

(30) Priorité: 20.11.2015 FR 1561171
(43) Date de publication de la demande: 24.05.2017
(73) Titulaire: COMMISSARIAT À L'ÉNERGIE ATOMIQUE ET AUX ÉNERGIES ALTERNATIVES, 75015 Paris (FR)
(72) Inventeur: MAI, Thi Thanh Yen, HA NOI (VN); CHAINTREUIL, Nicolas, 73800 MONTMELIAN (FR); DESMOULIERE, Jean-Baptiste, 73230 Saint-Jean-d'Arvey (FR)
(74) Mandataire: Novaimo

(56) Documents cités:
- JP-A- 2003 028 916
- US-A- 4 129 823
- US-B1- 8 159 238

## Description

### Domaine technique de l'invention

L'invention concerne un procédé et un système de détermination de caractéristiques courant-tension d'une installation photovoltaïque, permettant notamment de tracer la courbe caractéristique courant-tension de l'installation photovoltaïque.

### État de la technique

Afin de s'assurer du bon fonctionnement d'une installation photovoltaïque, comportant un ou plusieurs modules ou panneaux photovoltaïques, il existe dans le commerce des outils de test permettant de tracer la « courbe I-V », ou courbe « courant-tension », de l'installation. Pour tracer cette courbe caractéristique, il est nécessaire de débrancher l'installation photovoltaïque et donc d'interrompre momentanément son fonctionnement. Il en résulte une perte de production d'énergie électrique. Pour contrôler tous les modules photovoltaïques ou strings de modules photovoltaïques d'une centrale photovoltaïque, il est souvent nécessaire d'arrêter le fonctionnement de la centrale pendant toute une journée, ce qui s'avère extrêmement pénalisant pour l'exploitant. Le document US 4129823A décrit un procédé pour déterminer les caractéristiques des installations photovoltaïques. Une technique connue pour tracer la courbe I-V d'une installation photovoltaïque utilise un transistor MOSFET qui est branché aux bornes de l'installation. Un signal de tension de commande Vgs appliqué entre la grille et la source du MOSFET commande le transistor pour le faire passer d'une phase de court-circuit ou de saturation, durant laquelle le MOSFET se comporte comme un interrupteur fermé, la tension Vgs étant supérieure à une tension de saturation Vgs(sat), à une phase de circuit ouvert, durant laquelle le MOSFET se comporte comme un interrupteur ouvert, la tension Vgs étant inférieure à une tension seuil Vgs(th), en passant par une phase linéaire, durant laquelle le MOSFET se comporte comme une résistance, la tension Vgs étant alors comprise entre Vgs(sat) et Vgs(th). Durant cette phase linéaire, la tension V aux bornes de l'installation photovoltaïque passe d'une tension nulle à une tension en circuit ouvert V_{oc}, tandis que le courant I produit par l'installation photovoltaïque passe du courant de court-circuit I_{cc} à un courant nul. La courbe I-V peut donc être tracée à partir de mesures du courant et de la tension pendant la phase linéaire de transition entre la phase de saturation ou de court-circuit du MOSFET et la phase de circuit ouvert du MOSFET.

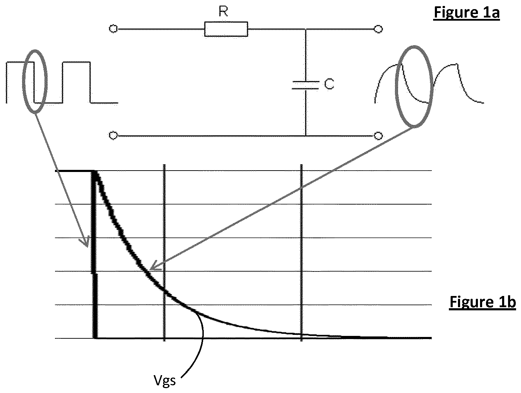

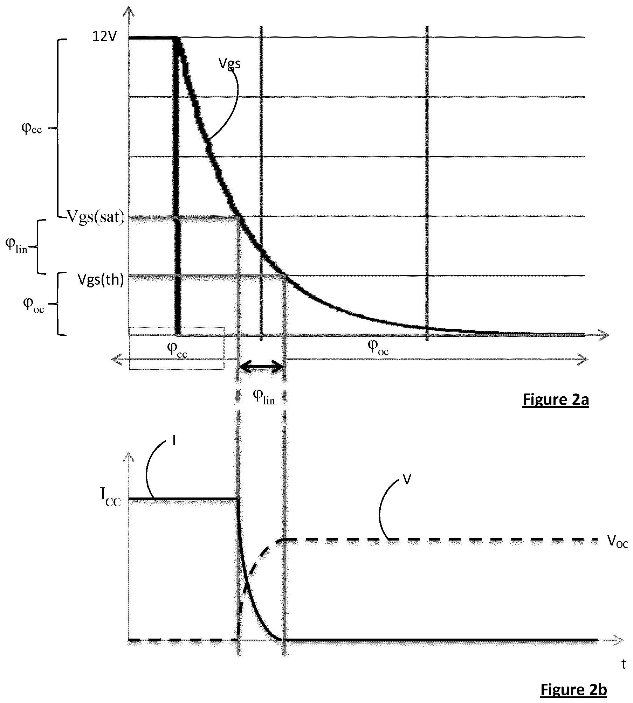

En référence aux figures 1a et 1b, pour générer le signal de tension de commande Vgs du transistor, on utilise un circuit analogique RC, qui transforme une rampe de tension verticale, durant laquelle la tension passe d'une tension Vₘₐₓ (par exemple 12V), supérieure à Vgs(sat), à une tension nulle de façon instantanée ou quasi-instantanée, en une rampe de tension incurvée permettant de ralentir le temps de transition entre Vₘₐₓ et la tension nulle, ce qui laisse le temps de réaliser des mesures durant la phase linéaire entre Vgs(sat) et Vgs(th). Sur la figure 2a, on a représenté l'évolution de la tension de commande Vgs avec la phase de court-circuit ϕ_{cc}, la phase linéaire ϕₗᵢₙ, et la phase de circuit ouvert ϕ_{oc}, et, sur la figure 2b, l'évolution parallèle du courant I produit par l'installation photovoltaïque et de la tension V à ses bornes.

En pratique, cette méthode pour tracer la courbe I-V est consommatrice en temps et en ressources pour plusieurs raisons. Avant d'atteindre la phase linéaire pendant laquelle la tension et le courant du module photovoltaïque varient, il faut attendre que la tension de commande Vgs diminue jusqu'à la tension Vgs(sat), ce qui induit un certain temps de retard entre le déclenchement de l'opération de traçage (c'est-à-dire le début de la rampe à 12V) et la période utile pour les mesures (c'est-à-dire la phase linéaire ϕₗᵢₙ). La durée de la fin de la rampe, postérieure à la phase linéaire ϕₗᵢₙ, est également assez longue. En outre, la tension de saturation Vgs(sat) et la tension seuil Vgs(th) pouvant varier en fonction de la température, il est nécessaire de faire l'acquisition de points de mesure de la tension et du courant de l'installation photovoltaïque sur la totalité ou la quasi-totalité de la rampe, puis de traiter les données mesurées afin d'en extraire celles correspondant à la phase linéaire ϕₗᵢₙ.

La présente invention vient améliorer la situation.

### Objet de l'invention

A cet effet, l'invention concerne un procédé de détermination de caractéristiques courant-tension d'une installation photovoltaïque comprenant les étapes suivantes :
- connecter un transistor de type MOSFET à l'installation photovoltaïque ;
- appliquer au transistor un signal d'une tension de commande qui parcourt une plage de régime linéaire du transistor, comprise entre deux tensions critiques comprenant une tension de saturation et une tension seuil, et
- mesurer le courant et la tension de l'installation photovoltaïque durant le parcours de ladite plage correspondant au régime linéaire du transistor,
caractérisé en ce que le signal de tension de commande du transistor est généré à partir d'un signal de commande numérique et en ce que, le transistor étant initialement en régime de court-circuit ou de circuit ouvert, on commande une première variation rapide de la tension de commande vers ladite plage de régime linéaire du transistor puis une deuxième variation lente de la tension de commande parcourant ladite plage de régime linéaire du transistor, la transition entre la première et la deuxième variation étant discontinue.

Les termes « rapide » et « lente » ont un sens relatif entre eux et signifient que la vitesse de variation de la tension de commande est plus élevée lors de la phase de variation dite « rapide » que lors de la phase de variation dite « lente ».

Grâce à l'invention, la durée de l'opération de détermination des caractéristiques courant-tension est fortement réduite car la tension de commande du transistor atteint rapidement et de façon contrôlée numériquement la plage de régime linéaire du transistor, c'est-à-dire la plage de tensions de commande comprises entre la tension de saturation et la tension seuil du transistor. En outre, cette plage de régime linéaire est parcourue lentement à une vitesse contrôlée de façon numérique, ce qui permet de réaliser suffisamment de mesures du courant et de la tension de l'installation photovoltaïque.

Dans un mode de réalisation particulier, le transistor étant initialement en régime de court-circuit, on commande une première baisse rapide de la tension de commande vers ladite plage de régime linéaire du transistor puis une deuxième baisse lente de la tension de commande parcourant ladite plage de régime linéaire du transistor.

Ainsi, les caractéristiques courant-tension de l'installation photovoltaïque sont déterminées lorsque le transistor passe du régime de court-circuit au régime de circuit ouvert, durant le régime linéaire intermédiaire.

Avantageusement, la deuxième variation lente de la tension de commande a une durée comprise entre 0,8 ms et 10 ms.

Avantageusement encore, la première variation rapide de la tension de commande a une durée inférieure ou égale à 10 µs.

Dans un mode de réalisation particulier, suite à la deuxième baisse lente de la tension de commande, on commande une troisième baisse rapide de ladite tension de commande jusqu'à atteindre une tension nulle, la transition entre la deuxième et la troisième baisse étant discontinue.

Ainsi, on réduit la durée de la phase postérieure à la plage de régime linéaire durant laquelle la tension de commande est mise à zéro, ce qui réduit encore la durée globale de l'opération.

Avantageusement, la troisième baisse rapide a une durée inférieure ou égale à 10 µs.

Avantageusement encore, le signal de tension de commande comprenant une phase initiale durant laquelle la tension de commande est nulle, on commande une augmentation de ladite tension de commande de la tension nulle jusqu'à une tension haute, supérieure à la tension de saturation, puis un maintien de la tension haute pendant une durée comprise entre 10 nanosecondes et 100 nanosecondes.

Dans un mode de réalisation particulier, on génère un signal PWM à l'aide d'un microcontrôleur qui commande de façon numérique des variations d'un rapport cyclique dudit signal PWM, puis on filtre le signal avec un filtre passe-bas de sorte à obtenir un signal de tension ayant un profil souhaité.

Avantageusement, ledit signal de tension ayant le profil souhaité est amplifié en puissance afin d'obtenir le signal de tension de commande.

Le signal de tension de commande est réalisé à partir d'un signal PWM dont le rapport cyclique est contrôlé numériquement par un microcontrôleur. En faisant varier ce rapport cyclique et la vitesse de variation de ce rapport cyclique par des commandes numériques, on génère en sortie du filtre passe-bas un signal analogique de tension ayant le profil recherché. Le dispositif d'amplification permet de mettre ce signal à l'échelle du transistor à commander, c'est-à-dire d'amplifier la tension en sortie du filtre pour obtenir un niveau de tension adapté pour commander le transistor.

Dans une variante de réalisation, durant la première variation de la tension de commande, on mesure au moins l'une des grandeurs physiques relatives au transistor du groupe comportant une température, un courant et une tension, afin de détecter le régime linéaire du transistor.

Le transistor peut être de type IGBT.

L'invention concerne aussi un système de détermination de caractéristiques courant-tension d'une installation photovoltaïque comprenant un transistor de type MOSFET à connecter aux bornes de l'installation photovoltaïque, un circuit de commande destiné à appliquer au transistor un signal d'une tension de commande qui parcourt une plage de régime linéaire du transistor, comprise entre deux tensions critiques comprenant une tension de saturation et une tension seuil, et un dispositif de mesure pour mesurer le courant et la tension de l'installation photovoltaïque durant le parcours de ladite plage correspondant au régime linéaire du transistor, caractérisé en ce que le circuit de commande est un circuit de commande numérique adapté pour produire un signal de tension de commande du transistor, initialement en régime de court-circuit ou de circuit ouvert, qui comprend une première variation rapide de la tension de commande vers ladite plage de régime linéaire du transistor puis une deuxième variation lente de la tension de commande parcourant ladite plage de régime linéaire du transistor, la transition entre la première et la deuxième variation étant discontinue.

Le système comprend avantageusement tout ou partie des caractéristiques additionnelles suivantes :
- le transistor étant initialement en régime de court-circuit, le signal de tension de commande comprend une première baisse rapide de la tension de commande vers ladite plage de régime linéaire du transistor puis une deuxième baisse lente de la tension de commande parcourant ladite plage de régime linéaire du transistor ;
- le circuit de commande numérique comprend un microcontrôleur destiné à générer un signal PWM et à modifier un rapport cyclique dudit signal PWM et un filtre passe-bas destiné à filtrer le signal PWM de sorte à obtenir un signal de tension ayant un profil souhaité ;
- le système comprend un dispositif d'amplification de puissance destiné à amplifier en puissance le signal de tension ayant le profil souhaité afin d'obtenir le signal de tension de commande ;
- le système comprend des capteurs de mesure de l'une au moins des grandeurs physiques relatives au transistor du groupe comportant une température, un courant et une tension, et un module de détection destiné à détecter le régime linéaire du transistor à partir des mesures ;
- le transistor est de type IGBT.

### Description sommaire des dessins

L'invention sera mieux comprise à l'aide de la description suivante d'un mode de réalisation particulier du procédé de détermination de caractéristiques courant-tension d'une installation photovoltaïque de l'invention, en référence aux dessins annexés sur lesquels :
- La figure 3 représente de façon schématique un signal de tension de commande d'un transistor MOSFET, selon un mode de réalisation particulier de l'invention ;
- La figure 4 représente un signal de tension de commande d'un transistor MOSFET mesuré, selon un premier exemple de réalisation particulier de l'invention ;
- La figure 5 représente un signal de tension de commande d'un transistor IGBT mesuré, selon un deuxième exemple de réalisation particulier de l'invention ;
- La figure 6 représente un schéma bloc fonctionnel d'un système de détermination des caractéristiques courant-tension d'une installation photovoltaïque selon une forme de réalisation particulière de l'invention ;
- La figure 7 représente un organigramme des étapes du procédé de traçage selon un mode de réalisation particulier de l'invention.

### Description détaillée de modes de réalisation particuliers de l'invention

L'invention vise à déterminer les caractéristiques courant-tension d'une installation photovoltaïque 1, permettant de tracer la courbe caractéristique I-V (courant-tension) de l'installation photovoltaïque 1. L'installation photovoltaïque 1 peut comprendre un ou plusieurs modules photovoltaïques, par exemple un string de modules photovoltaïques. Elle peut faire partie d'une centrale photovoltaïque de production d'énergie électrique.

Afin de déterminer les caractéristiques courant-tension d'une installation photovoltaïque, on utilise un système de contrôle 2 intégrant les éléments suivants :
- un transistor de type MOSFET 3 ;
- un circuit de commande 4, destiné à commander le fonctionnement du transistor 3 ;
- un dispositif de mesure 5 destiné à mesurer la tension et le courant de l'installation photovoltaïque 1 ;
- une interface utilisateur 6 ;
- des câbles et connecteurs pour la connexion du transistor 3 et du dispositif de mesure 5 à une installation photovoltaïque à contrôler.

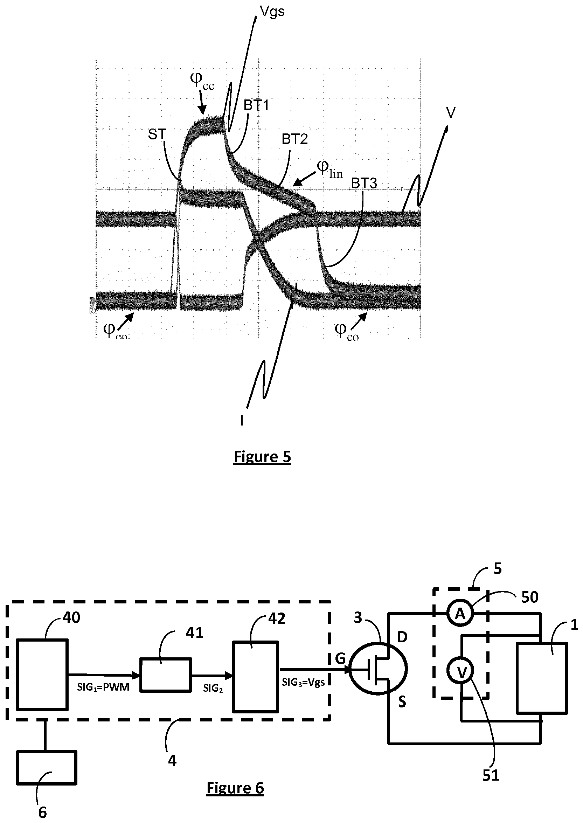

Le transistor 3, ici un MOSFET, est destiné à être connecté à l'installation photovoltaïque 1 de sorte à ce que le transistor 3 et l'installation photovoltaïque 1 soient connectés en série en circuit fermé, comme représenté sur la figure 6. Le transistor 3 sert à déterminer les caractéristiques courant-tension de l'installation photovoltaïque 1. Un autre transistor, non représenté, sert à isoler, ou débrancher, l'installation photovoltaïque 1 du système de production.

Le dispositif de mesure 5 est destiné à mesurer le courant I de sortie de l'installation photovoltaïque 1 et la tension V aux bornes de l'installation photovoltaïque 1. Il comprend ici un dispositif 50 de mesure de courant relié en série à l'installation photovoltaïque 1 et un dispositif 51 de mesure de tension relié en parallèle aux bornes de l'installation photovoltaïque 1.

Le circuit de commande 4 est destiné à délivrer un signal de tension de commande au transistor MOSFET 3. Cette tension de commande du transistor 3 est la tension Vgs entre la grille et la source du MOSFET. Le circuit 4 est un circuit de commande numérique. Il comprend un microcontrôleur 40, un filtre passe-bas 41 et un dispositif d'amplification 42.

Le microcontrôleur 40 est destiné à produire un signal de commande numérique pour générer un signal de sortie PWM (de l'anglais « *Pulse Width Modulation* »), noté SIG₁. Le signal PWM SIG₁ est un signal à modulation de largeur d'impulsions (MLI). Il s'agit d'un signal logique à deux états, haut et bas, à fréquence fixe mais dont le rapport cyclique est contrôlé numériquement. En sortie du microcontrôleur, le signal PWM est un signal de tension à deux états haut et bas, l'état haut correspondant à une tension haute, généralement 3,3V, et l'état bas correspondant à une tension nulle. Des commandes numériques du microcontrôleur 40 permettent de faire varier le rapport cyclique du signal PWM.

Le filtre passe-bas 41, connecté en sortie du microcontrôleur 40, est destiné à faire la moyenne du signal PWM SIG₁ de sortie du microcontrôleur, cette moyenne étant proportionnelle au rapport cyclique. En faisant varier le rapport cyclique, on peut ainsi obtenir en sortie du filtre passe-bas 41 un signal de tension analogique, noté SIG₂, ayant un profil recherché, c'est-à-dire un profil analogue à celui du signal de tension de commande souhaité.

Le dispositif d'amplification 42, connecté en sortie du filtre passe-bas 41, est destiné à amplifier en puissance le signal de tension SIG₂ délivré par le filtre passe-bas 41 afin de produire un signal de tension de commande SIG₃ adapté pour commander le transistor MOSFET 3 (c'est-à-dire ayant un niveau de tension adéquat). Ce signal de tension de commande SIG₃ est appliqué entre la grille et la source du transistor MOSFET 3. La tension Vgs entre la grille et la source du MOSFET 3 est donc égale au signal SIG₃.

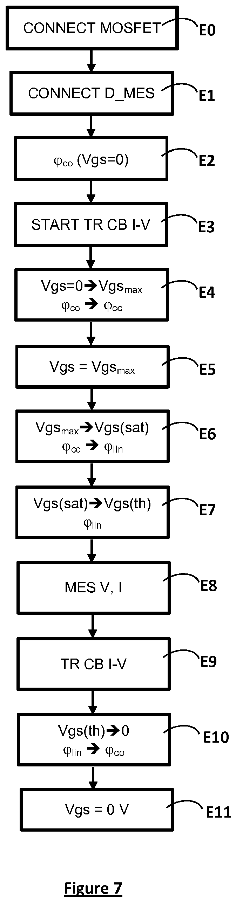

On va maintenant décrire, en référence à la figure 7, le procédé de détermination des caractéristiques courant-tension de l'installation photovoltaïque 1, permettant de tracer la courbe I-V de celle-ci, selon un mode de réalisation particulier de l'invention.

Le procédé comprend une première étape E0 de connexion du MOSFET, lors de laquelle un opérateur connecte le transistor MOSFET 3 en série avec l'installation photovoltaïque 1, le MOSFET 3 et l'installation 1 étant reliés en circuit fermé, comme représenté sur la figure 6. Le circuit de commande 4 est connecté au transistor MOSFET et adapté à lui appliquer une tension de commande Vgs entre la grille et la source.

Comme précédemment indiqué, le signal de tension de commande Vgs est généré à partir d'un signal PWM (SIG₁) produit en sortie du microcontrôleur 40. Ce signal PWM est ensuite filtré par le filtre passe-bas 41 puis amplifié par le dispositif 42 afin de générer le signal de tension de commande Vgs. Le rapport cyclique du signal PWM SIG₁ qui est produit en sortie du microcontrôleur 40 est paramétré, contrôlé, par des commandes numériques générées par le microcontrôleur 40.

Le procédé comprend une deuxième étape E1 de connexion du dispositif de mesure 5, lors de laquelle le dispositif 50 de mesure de courant est connecté en série avec l'installation photovoltaïque 1 et le dispositif 51 de mesure de tension est branché en parallèle aux bornes de l'installation photovoltaïque 1, comme représenté sur la figure 6.

Durant une étape ou phase initiale E2, le circuit de commande 4 applique au transistor MOSFET 3 une tension de commande Vgs nulle. A cet effet, le microcontrôleur 40 génère ici en sortie un signal PWM SIG₁ ayant un rapport cyclique égal à zéro à partir d'une commande numérique indiquant α=0. Pendant cette phase initiale E2, la tension de commande Vgs étant nulle et par conséquent inférieure à la tension seuil Vgs(th), le transistor MOSFET 3 est en régime de circuit ouvert, noté ϕ_{co}, et se comporte comme un interrupteur ouvert.

Lors d'une étape E3, un opérateur déclenche une opération de traçage de la courbe I-V de l'installation photovoltaïque 1, par exemple en activant une commande spécifique de l'interface utilisateur 6 de l'installation 1 à un instant t₁.

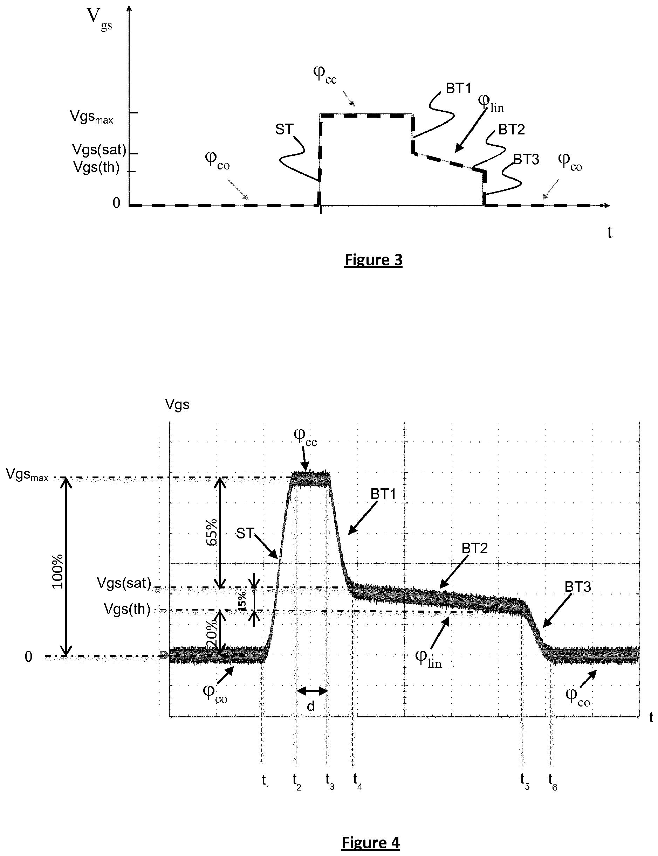

Sur activation de la commande de traçage de la courbe I-V, le microcontrôleur 40 commande une augmentation du rapport cyclique α du signal PWM SIG₁ de sorte à faire passer rapidement ce rapport α de la valeur 0 à la valeur 1, lors d'une étape E4. Corrélativement, le circuit de commande 4 augmente la tension de commande Vgs appliquée au transistor 3, qui passe rapidement de la tension nulle à une tension haute maximale, notée Vgsₘₐₓ, par exemple égale à 12 V. Cette tension haute Vgsₘₐₓ est en toute hypothèse supérieure à la tension de saturation Vgs(sat) du transistor 3. Le signal de tension de commande Vgs (SIG₃) comprend ainsi un saut de tension ST entre 0V à Vgsₘₐₓ (ici 12V). La durée de ce saut de tension ST, entre l'instant t₁ et un instant t₂, est avantageusement de l'ordre de quelques microsecondes, avantageusement inférieure à 10 µs. Le saut de tension ST pourrait être instantané ou quasi-instantané, comme représenté sur la figure 3. Cette augmentation de la tension de commande Vgs fait passer le transistor MOSFET 3 du régime initial de circuit ouvert ϕ_{co} à un régime de court-circuit, noté ϕ_{cc}, dans lequel le transistor 3 se comporte comme un interrupteur fermé.

Lors d'une étape E5, le microcontrôleur 40 commande un maintien du rapport cyclique α égal à 1 pendant une courte durée d, entre l'instant t₂ et un instant t₃. Cette durée d est avantageusement comprise entre 10 nanosecondes et 100 nanosecondes. Corrélativement, le circuit de commande 4 applique une tension de commande Vgs stable, égale la tension haute maximale Vgsₘₐₓ (ici 12 V), pendant la durée d. Durant ce plateau de tension Vgsₘₐₓ, le transistor 3 demeure en régime de court-circuit ϕ_{cc}.

A l'expiration de la durée d, à compter de l'instant t₃, le microcontrôleur 40 commande une première diminution dite « rapide » du rapport cyclique α afin de le faire passer rapidement, voire instantanément ou quasi-instantanément, de la valeur 1 à une première valeur critique, lors d'une étape E6. Cette première valeur critique du rapport cyclique α correspond à une tension de commande égale, ou sensiblement égale, à la tension de saturation Vgs(sat) du transistor 3. Elle est égale à 0,35 dans l'exemple de la figure 4. La tension de saturation Vgs(sat) est ici celle indiquée dans les caractéristiques techniques du transistor 3 fournies par le fabricant. Elle est mémorisée par le microcontrôleur 40 qui en déduit par calcul la valeur critique du rapport cyclique α correspondante. Corrélativement, le circuit de commande 4 commande une première baisse rapide (ou chute) de la tension de commande Vgs appliquée au transistor 3 qui la fait passer de la tension haute Vgsₘₐₓ à une première tension critique égale à la tension de saturation Vgs(sat). Cette première baisse rapide de tension est notée BT1. Sa durée est de préférence inférieure à 10 µs, par exemple de l'ordre de quelques microsecondes. Elle pourrait être instantanée ou quasi-instantanée. En variante, la première baisse rapide de la tension de commande permet d'approcher la tension de saturation Vgs(sat), autrement dit d'atteindre une tension proche de celle-ci.

Après la première baisse rapide de tension BT1, lors d'une étape E7, le microcontrôleur 40 ralentit la diminution du rapport cyclique α afin de le faire passer lentement de la première valeur critique (égale à 0,35 sur la figure 4) à une deuxième valeur critique (égale à 0,20 sur la figure 4). Cette deuxième valeur critique du rapport cyclique α correspond à une tension de commande égale à la tension de seuil Vgs(th) du transistor 3. Corrélativement, la décroissance de la tension de commande Vgs est ralentie. Le circuit de commande 4 commande ainsi une deuxième baisse lente de la tension de commande Vgs, notée BT2, jusqu'à la tension seuil Vgs(th). La tension de commande Vgs diminue lentement afin de passer de la tension de saturation Vgs(sat) à la tension seuil Vgs(th). Durant cette phase de baisse lente BT2 de la tension de commande Vgs, le transistor 3 est en régime linéaire ϕₗᵢₙ et se comporte comme une résistance variable. La tension de commande Vgs parcourt ainsi la plage de régime linéaire du transistor 3 comprise entre Vgs(sat) et Vgs(th). La tension seuil Vgs(th) fait partie des caractéristiques techniques du transistor 3 fournies par le fabricant et est mémorisée dans le microcontrôleur 40. La durée de cette phase de baisse lente BT2 de la tension de commande est comprise entre 800 µs et 10 ms.

La transition entre la première baisse rapide BT1 et la deuxième baisse lente BT2 de la tension de commande Vgs est discontinue, c'est-à-dire brusque ou non progressive. Cela se traduit par une discontinuité dans l'évolution temporelle de la tension de commande Vgs entre les deux phases de baisse BT1 et BT2.

Durant la phase de baisse lente BT2 de la tension de commande Vgs, le transistor 3 étant en régime linéaire, le dispositif de mesure 5 mesure la tension V aux bornes de l'installation photovoltaïque 1 et le courant I de sortie de l'installation photovoltaïque 1, lors d'une étape E8. Les mesures de V et de I pendant que le transistor 3 est en régime linéaire permettent de tracer la courbe caractéristique I-V de l'installation photovoltaïque 1, lors d'une étape E9. Cette courbe I-V peut être affichée sur un écran de l'interface utilisateur 6.

Après la deuxième baisse lente BT2 de la tension de commande Vgs, à compter d'un instant t₅, lors d'une étape E10, le microcontrôleur 40 commande une diminution brutale ou rapide du rapport cyclique α afin de le faire passer rapidement de la deuxième valeur critique (ici égale à 0,20) à la valeur 0. Corrélativement, le circuit de commande 4 commande une troisième baisse rapide BT3 de la tension de commande Vgs qui la fait passer de la tension seuil Vgs(th) à une tension nulle. La durée de cette phase BT3 de baisse rapide de la tension de commande Vgs est avantageusement inférieure à 10 µs, par exemple de l'ordre de quelques microsecondes. La baisse BT3 pourrait être instantanée ou quasi-instantanée. La baisse BT3 fait passer la tension de commande Vgs au-dessous de la tension seuil Vgs(th) de sorte que le transistor 3 passe en régime de circuit ouvert ϕ_{co}.

La transition entre la deuxième baisse lente BT2 et la troisième baisse rapide BT3 de la tension de commande Vgs est discontinue, c'est-à-dire brusque ou non progressive. Cela se traduit par une discontinuité dans l'évolution temporelle de la tension de commande Vgs entre les deux phases de baisse BT2 et BT3.

Par les termes « rapide » et « lente », on entend signifier que la vitesse de variation de la tension est plus élevée lors de la phase de variation BT1 (ou BT3) dite « rapide » que lors de la deuxième phase de variation BT2 dite « lente ».

Lors d'une étape E11, à compter d'un instant t₆, le microcontrôleur 40 commande un maintien du rapport cyclique α égal à 0. Corrélativement, le circuit de commande 4 applique une tension de commande Vgs stable, égale à une valeur de 0V. Le transistor 3 demeure en régime de circuit ouvert ϕ_{co}.

Dans la description qui précède, le début et la fin de la plage de tensions de commande correspondant au régime linéaire du transistor sont déterminés à partir de la tension de saturation Vgs(sat) et de la tension seuil Vgs(th) indiquées par le fabricant. Dans un autre mode de réalisation, on détecte le début et/ou la fin de cette plage de régime linéaire à partir de mesures de l'une au moins des grandeurs physiques relatives au transistor du groupe comportant une température, un courant et une tension. Par exemple, le début de la phase linéaire peut être détecté par une variation de la tension et/ou du courant aux bornes du transistor 3. La fin de la phase linéaire peut être détecté par une absence de variation des mêmes grandeurs aux bornes du transistor 3. Ces mesures relatives au transistor permettent de détecter la transition entre le régime de court-circuit et le régime linéaire et la transition entre le régime linéaire et le régime de circuit ouvert.

Dans le mode de réalisation précédemment décrit, les données caractéristiques de courant et de tension relatives à l'installation photovoltaïque 1 sont mesurées lorsque le transistor est en régime linéaire pour passer du régime de court-circuit au régime de circuit ouvert, autrement dit lorsque la tension de commande parcourt la plage de Miller de la tension de saturation Vgs(sat) à la tension seuil Vgs(th). En variante, on pourrait mesurer les données caractéristiques de courant et de tension de l'installation photovoltaïque 1 lorsque le transistor est en régime linéaire pour passer du régime de circuit ouvert au régime de court-circuit, autrement dit lorsque la tension de commande parcourt la plage de Miller de la tension seuil Vgs(th) à la tension de saturation Vgs(sat). Dans ce cas, le transistor étant initialement en régime de circuit ouvert (la tension de commande appliquée Vgs étant nulle), le circuit 4 commande une première augmentation rapide de la tension de commande vers la plage de régime linéaire du transistor, ou plage de Miller, puis une deuxième augmentation lente de la tension de commande parcourant la plage de régime linéaire du transistor, la transition entre les deux augmentations, rapide et lente, étant discontinue.

Ainsi, d'une manière générale, l'invention est basée sur la génération d'un signal de tension de commande Vgs du transistor 3 à partir d'un signal de commande numérique. Le transistor étant initialement soit en régime de court-circuit ϕ_{cc}, soir en régime de circuit ouvert ϕ_{co}, le signal de tension de commande comprend une première variation rapide de la tension de commande Vgs vers la plage de régime linéaire du transistor 3 puis une deuxième variation lente de la tension de commande Vgs parcourant cette plage de régime linéaire du transistor 3, la transition entre la première et la deuxième variation étant discontinue (non progressive).

## Revendications

1. Procédé de détermination de caractéristiques courant-tension d'une installation photovoltaïque (1) comprenant les étapes suivantes :
• connecter (E0) un transistor de type MOSFET (3) à l'installation photovoltaïque (1),
• appliquer (E7) au transistor un signal d'une tension de commande (Vgs) qui parcourt une plage (ϕₗᵢₙ) de régime linéaire du transistor (3), comprise entre deux tensions critiques comprenant une tension de saturation (Vgs(sat)) et une tension seuil (Vgs(th)), et
• mesurer le courant (I) et la tension (V) de l'installation photovoltaïque (1) durant le parcours de ladite plage correspondant au régime linéaire du transistor,
**caractérisé en ce que** le signal de tension de commande (Vgs) du transistor (3) est généré à partir d'un signal de commande numérique et **en ce que**, le transistor étant initialement en régime de court-circuit (ϕ_{cc}) ou de circuit ouvert (ϕ_{co}), on commande une première variation rapide (BT1) de la tension de commande (Vgs) vers ladite plage de régime linéaire du transistor (3) puis une deuxième variation lente (BT2) de la tension de commande (Vgs) parcourant ladite plage de régime linéaire du transistor (3), la transition entre la première et la deuxième variation étant discontinue.

2. Procédé selon la revendication 1, **caractérisé en ce que**, le transistor étant initialement en régime de court-circuit (ϕ_{cc}), on commande une première baisse rapide (BT1) de la tension de commande (Vgs) vers ladite plage de régime linéaire du transistor (3) puis une deuxième baisse lente (BT2) de la tension de commande (Vgs) parcourant ladite plage de régime linéaire du transistor (3).

3. Procédé selon la revendication 1, **caractérisé en ce que** la deuxième variation lente de la tension de commande a une durée comprise entre 0,8 ms et 10 ms.

4. Procédé selon l'une des revendications précédentes, **caractérisé en ce que** la première variation rapide de la tension de commande a une durée inférieure ou égale à 10 µs.

5. Procédé selon l'une des revendications 2 à 4, **caractérisé en ce que**, suite à la deuxième baisse lente de la tension de commande, on commande une troisième baisse rapide de ladite tension de commande jusqu'à atteindre une tension nulle, la transition entre la deuxième et la troisième baisse étant discontinue.

6. Procédé selon l'une des revendications 2 à 4, **caractérisé en ce que** la troisième baisse rapide a une durée inférieure ou égale à 10 µs.

7. Procédé selon l'une des revendications 2 à 6, **caractérisé en ce que** le signal de tension de commande comprenant une phase initiale durant laquelle la tension de commande est nulle, on commande une augmentation de ladite tension de commande de la tension nulle jusqu'à une tension haute, supérieure à la tension de saturation, puis un maintien de la tension haute pendant une durée comprise entre 10 nanosecondes et 100 nanosecondes.

8. Procédé selon l'une des revendications précédentes, **caractérisé en ce qu'**on génère un signal PWM à l'aide d'un microcontrôleur qui commande de façon numérique des variations d'un rapport cyclique dudit signal PWM, puis on filtre le signal avec un filtre passe-bas de sorte à obtenir un signal de tension ayant un profil souhaité.

9. Procédé selon la revendication précédente, **caractérisé en ce que** ledit signal de tension ayant le profil souhaité est amplifié en puissance afin d'obtenir le signal de tension de commande.

10. Procédé selon l'une des revendications précédentes, **caractérisé en ce que**, durant la première variation de la tension de commande, on mesure au moins l'une des grandeurs physiques relatives au transistor du groupe comportant une température, un courant et une tension, afin de détecter le régime linéaire du transistor.

11. Procédé selon l'une des revendications précédentes, **caractérisé en ce que** le transistor est de type IGBT.

12. Système de détermination de caractéristiques courant-tension d'une installation photovoltaïque (1) comprenant un transistor de type MOSFET à connecter aux bornes de l'installation photovoltaïque, un circuit de commande (4) destiné à appliquer au transistor un signal d'une tension de commande (Vgs) qui parcourt une plage (ϕₗᵢₙ) de régime linéaire du transistor (3), comprise entre deux tensions critiques comprenant une tension de saturation (Vgs(sat)) et une tension seuil (Vgs(th)), et un dispositif de mesure (5) pour mesurer le courant (I) et la tension (V) de l'installation photovoltaïque (1) durant le parcours de ladite plage correspondant au régime linéaire du transistor, **caractérisé en ce que** le circuit de commande est un circuit de commande numérique adapté pour produire un signal de tension de commande du transistor, initialement en régime de court-circuit (ϕ_{cc}) ou de circuit ouvert (ϕ_{co}), qui comprend une première variation rapide (BT1) de la tension de commande (Vgs) vers ladite plage de régime linéaire du transistor (3) puis une deuxième variation lente (BT2) de la tension de commande (Vgs) parcourant ladite plage de régime linéaire du transistor (3), la transition entre la première et la deuxième variation étant discontinue.

13. Système selon la revendication précédente, **caractérisé en ce que**, le transistor étant initialement en régime de court-circuit (ϕ_{cc}), le signal de tension de commande comprend une première baisse rapide (BT1) de la tension de commande (Vgs) vers ladite plage de régime linéaire du transistor (3) puis une deuxième baisse lente (BT2) de la tension de commande (Vgs) parcourant ladite plage de régime linéaire du transistor (3).

14. Système selon la revendication 12 ou 13, **caractérisé en ce que** le circuit de commande numérique comprend un microcontrôleur destiné à générer un signal PWM et à modifier un rapport cyclique dudit signal PWM et un filtre passe-bas destiné à filtrer le signal PWM de sorte à obtenir un signal de tension ayant un profil souhaité.

15. Système selon la revendication précédente, **caractérisé en ce qu'**il comprend un dispositif d'amplification de puissance destiné à amplifier en puissance le signal de tension ayant le profil souhaité afin d'obtenir le signal de tension de commande.

16. Système selon l'une des revendications 12 à 15, **caractérisé en ce qu'**il comprend des capteurs de mesure de l'une au moins des grandeurs physiques relatives au transistor du groupe comportant une température, un courant et une tension, et un module de détection destiné à détecter le régime linéaire du transistor à partir des mesures.

17. Système selon l'une des revendications 12 à 16, **caractérisé en ce que** le transistor est de type IGBT.

## Patentansprüche

1. Verfahren zur Bestimmung der Strom-Spannung-Charakteristiken einer photovoltaischen Anlage (1), umfassend die folgenden Schritte:
• Verbinden (E0) eines Transistors vom Typ MOSFET (3) mit der photovoltaischen Anlage (1),
• Anlegen (E7) eines Steuerspannungssignals (Vgs) an den Transistor, das einen Bereich (ϕₗᵢₙ) des linearen Zustands des Transistors (3) durchläuft, zwischen zwei kritischen Spannungen, umfassend eine Sättigungsspannung (Vgs(sat)) und eine Schwellenspannung (Vgs(th)), und
• Messen des Stroms (I) und der Spannung (V) der photovoltaischen Anlage (1) während des Durchlaufs des Bereichs entsprechend dem linearen Zustand des Transistors,
**dadurch gekennzeichnet, dass** das Steuerspannungssignal (Vgs) des Transistors (3) aus einem numerischen Steuersignal generiert wird, und dadurch, dass, wenn der Transistor anfänglich im Kurzschlusszustand (ϕ_{cc}) oder offenen Schaltungszustand (ϕ_{co}) ist, eine erste rasche Variation (BT1) der Steuerspannung (Vgs) zum Bereich des linearen Zustands des Transistors (3), dann eine zweite langsame Variation (BT2) der Steuerspannung (Vgs) gesteuert wird, die den Bereich des linearen Zustands des Transistors (3) durchläuft, wobei der Übergang zwischen der ersten und der zweiten Variation diskontinuierlich ist.

2. Verfahren nach Anspruch 1, **dadurch gekennzeichnet, dass**, wenn der Transistor anfänglich im Kurzschlusszustand (ϕ_{cc}) ist, eine erste rasche Senkung (BT1) der Steuerspannung (Vgs) zum Bereich des linearen Zustands des Transistors (3), dann eine zweite langsame Senkung (BT2) der Steuerspannung (Vgs) gesteuert wird, die den Bereich des linearen Zustands des Transistors (3) durchläuft.

3. Verfahren nach Anspruch 1, **dadurch gekennzeichnet, dass** die zweite langsame Variation der Steuerspannung eine Dauer zwischen 0,8 ms und 10 ms aufweist.

4. Verfahren nach einem der vorhergehenden Ansprüche, **dadurch gekennzeichnet, dass** die erste rasche Variation der Steuerspannung eine Dauer kleiner oder gleich 10 µs aufweist.

5. Verfahren nach einem der Ansprüche 2 bis 4, **dadurch gekennzeichnet, dass**, nach der zweiten langsamen Senkung der Steuerspannung, eine dritte rasche Senkung der Steuerspannung bis zum Erzielen einer Null-Spannung gesteuert wird, wobei der Übergang zwischen der zweiten und der dritten Senkung diskontinuierlich ist.

6. Verfahren nach einem der Ansprüche 2 bis 4, **dadurch gekennzeichnet, dass** die dritte rasche Senkung eine Dauer kleiner oder gleich 10 µs aufweist.

7. Verfahren nach einem der Ansprüche 2 bis 6, **dadurch gekennzeichnet, dass**, wenn das Steuerspannungssignal eine Initialphase umfasst, während welcher die Steuerspannung Null ist, eine Erhöhung der Steuerspannung von der Nullspannung auf eine hohe Spannung gesteuert wird, die über der Sättigungsspannung liegt, dann die hohe Spannung während einer Dauer zwischen 10 Nanosekunden und 100 Nanosekunden aufrechterhalten wird.

8. Verfahren nach einem der vorhergehenden Ansprüche, **dadurch gekennzeichnet, dass** ein Signal PWM mit Hilfe einer Mikrosteuereinheit generiert wird, die numerisch Variationen eines zyklischen Verhältnisses des Signals PWM steuert, dann das Signal mit einem Tiefpassfilter gefiltert wird, um ein Spannungssignal mit einem gewünschten Profil zu erhalten.

9. Verfahren nach dem vorhergehenden Anspruch, **dadurch gekennzeichnet, dass** das Spannungssignal mit dem gewünschten Profil leistungsverstärkt wird, um das Steuerspannungssignal zu erhalten.

10. Verfahren nach einem der vorhergehenden Ansprüche, **dadurch gekennzeichnet, dass**, während der ersten Variation der Steuerspannung, mindestens eine der physikalischen Größen in Bezug auf den Transistor der Gruppe umfassend eine Temperatur, einen Strom und eine Spannung gemessen wird, um den linearen Zustand des Transistors zu detektieren.

11. Verfahren nach einem der vorhergehenden Ansprüche, **dadurch gekennzeichnet, dass** der Transistor vom Typ IGBT ist.

12. System zur Bestimmung der Strom-Spannung-Charakteristiken einer photovoltaischen Anlage (1), umfassend einen Transistor vom Typ MOSFET, der mit Anschlüssen der photovoltaischen Anlage zu verbinden ist, eine Steuerschaltung (4), die dazu bestimmt ist, an den Transistor ein Steuerspannungssignal (Vgs) anzulegen, das einen Bereich (ϕₗᵢₙ) des linearen Zustands des Transistors (3) durchläuft, zwischen zwei kritischen Spannungen, umfassend eine Sättigungsspannung (Vgs(sat)) und einer Schwellenspannung (Vgs(th)), und eine Messvorrichtung (5) zum Messen des Stroms (I) und der Spannung (V) der photovoltaischen Anlage (1) während des Durchlaufs des Bereichs entsprechend dem linearen Zustand des Transistors, **dadurch gekennzeichnet, dass** die Steuerschaltung eine numerische Steuerschaltung ist, die eingerichtet ist, ein Steuerspannungssignal des Transistors zu generieren, der anfänglich im Kurzschlusszustand (ϕ_{cc}) oder offenen Schaltungszustand (ϕ_{co}) ist, umfassend eine erste rasche Variation (BT1) der Steuerspannung (Vgs) zum Bereich des linearen Zustands des Transistors (3), dann eine zweite langsame Variation (BT2) der Steuerspannung (Vgs), die den Bereich des linearen Zustands des Transistors (3) durchläuft, wobei der Übergang zwischen der ersten und der zweiten Variation diskontinuierlich ist.

13. System nach dem vorhergehenden Anspruch, **dadurch gekennzeichnet, dass**, wenn der Transistor anfänglich im Kurzschlusszustand (ϕ_{cc}) ist, das Steuerspannungssignal eine erste rasche Senkung (BT1) der Steuerspannung (Vgs) zum Bereich des linearen Zustands des Transistors (3), dann eine zweite langsame Senkung (BT2) der Steuerspannung (Vgs), die den Bereich des linearen Zustands des Transistors (3) durchläuft, umfasst.

14. System nach Anspruch 12 oder 13, **dadurch gekennzeichnet, dass** die numerische Steuerschaltung eine Mikrosteuereinheit, die dazu bestimmt ist, ein Signal PWM zu generieren, und ein zyklisches Verhältnis des Signals PWM zu modifizieren, und ein Tiefpassfilter, das dazu bestimmt ist, das Signal PWM zu filtern, um ein Spannungssignal mit einem gewünschten Profil zu erhalten, umfasst.

15. System nach dem vorhergehenden Anspruch, **dadurch gekennzeichnet, dass** dieses eine Leistungsverstärkervorrichtung umfasst, die dazu bestimmt ist, das Spannungssignal mit dem gewünschten Profil in der Leistung zu verstärken, um das Steuerspannungssignal zu erhalten.

16. System nach einem der Ansprüche 12 bis 15, **dadurch gekennzeichnet, dass** dieses Sensoren zur Messung mindestens einer der physikalischen Größen in Bezug auf den Transistor der Gruppe umfassend eine Temperatur, einen Strom und eine Spannung, und ein Detektionsmodul, das dazu bestimmt ist, den linearen Zustand des Transistors aus den Messungen zu detektieren, umfasst.

17. System nach einem der Ansprüche 12 bis 16, **dadurch gekennzeichnet, dass** der Transistor vom Typ IGBT ist.

## Claims

1. Method for determining current-voltage characteristics of a photovoltaic installation (1) comprising the following steps:
• connecting (E0) a MOSFET-type transistor (3) to the photovoltaic installation (1);
• applying (E7), to the transistor, a signal of a control voltage (Vgs) that crosses a linear regime range (ϕₗᵢₙ) of the transistor (3), between two critical voltages comprising a saturation voltage (Vgs(sat)) and a threshold voltage (Vgs(th)); and
• measuring the current (I) and the voltage (V) of the photovoltaic installation (1) while said range corresponding to the linear regime of the transistor is being crossed,
**characterized in that** the control voltage signal (Vgs) of the transistor (3) is generated from a digital control signal and **in that**, the transistor initially being in short-circuit (ϕ_{cc}) or open-circuit (ϕ_{co}) regime, a command is issued for a first, rapid variation (BT1) in the control voltage (Vgs) in the direction of said linear regime range of the transistor (3), then a second, slow variation (BT2) in the control voltage (Vgs) crossing said linear regime range of the transistor (3), the transition between the first and the second variation being discontinuous.

2. Method according to Claim 1, **characterized in that**, the transistor initially being in short-circuit (ϕ_{cc}) regime, a command is issued for a first, rapid drop (BT1) in the control voltage (Vgs) in the direction of said linear regime range of the transistor (3), then a second, slow drop (BT2) in the control voltage (Vgs) crossing said linear regime range of the transistor (3).

3. Method according to Claim 1, **characterized in that** the duration of the second, slow variation in the control voltage is between 0.8 ms and 10 ms.

4. Method according to one of the preceding claims, **characterized in that** the duration of the first, rapid variation in the control voltage is less than or equal to 10 µs.

5. Method according to one of Claims 2 to 4, **characterized in that**, subsequent to the second, slow drop in the control voltage, a command is issued for a third, rapid drop in said control voltage to a zero voltage, the transition between the second and the third drop being discontinuous.

6. Method according to one of Claims 2 to 4, **characterized in that** the duration of the third, rapid drop is less than or equal to 10 µs.

7. Method according to one of Claims 2 to 6, **characterized in that**, the control voltage signal comprising an initial phase in which the control voltage is zero, a command is issued for increasing said control voltage from the zero voltage up to a high voltage higher than the saturation voltage, then holding the high voltage for a duration of between 10 nanoseconds and 100 nanoseconds.

8. Method according to one of the preceding claims, **characterized in that** a PWM signal is generated using a microcontroller that digitally controls variations in a duty cycle of said PWM signal, then the signal is filtered using a low-pass filter so as to obtain a voltage signal having a desired profile.

9. Method according to the preceding claim, **characterized in that** said voltage signal having the desired profile is power-amplified in order to obtain the control voltage signal.

10. Method according to one of the preceding claims, **characterized in that**, during the first variation in the control voltage, at least one of the physical quantities relating to the transistor from the group comprising a temperature, a current and a voltage is measured, in order to detect the linear regime of the transistor.

11. Method according to one of the preceding claims, **characterized in that** the transistor is of IGBT type.

12. System for determining current-voltage characteristics of a photovoltaic installation (1) comprising a MOSFET-type transistor to be connected to the terminals of the photovoltaic installation, a control circuit (4) intended to apply, to the transistor, a signal of a control voltage (Vgs) that crosses a linear regime range (ϕₗᵢₙ) of the transistor (3), between two critical voltages comprising a saturation voltage (Vgs(sat)) and a threshold voltage (Vgs(th)), and a measuring device (5) for measuring the current (I) and the voltage (V) of the photovoltaic installation (1) while said range corresponding to the linear regime of the transistor is being crossed, **characterized in that** the control circuit is a digital control circuit suitable for producing a control voltage signal of the transistor, initially in short-circuit (ϕ_{cc}) or open-circuit (ϕ_{co}) regime, which comprises a first, rapid variation (BT1) in the control voltage (Vgs) in the direction of said linear regime range of the transistor (3), then a second, slow variation (BT2) in the control voltage (Vgs) crossing said linear regime range of the transistor (3), the transition between the first and the second variation being discontinuous.

13. System according to the preceding claim, **characterized in that**, the transistor initially being in short-circuit (ϕ_{cc}) regime, the control voltage signal comprises a first, rapid drop (BT1) in the control voltage (Vgs) in the direction of said linear regime range of the transistor (3), then a second, slow drop (BT2) in the control voltage (Vgs) crossing said linear regime range of the transistor (3).

14. System according to Claim 12 or 13, **characterized in that** the digital control circuit comprises a microcontroller intended to generate a PWM signal and to modify a duty cycle of said PWM signal and a low-pass filter intended to filter the PWM signal so as to obtain a voltage signal having a desired profile.

15. System according to the preceding claim, **characterized in that** it comprises a power amplification device intended to power-amplify the voltage signal having the desired profile in order to obtain the control voltage signal.

16. System according to one of Claims 12 to 15, **characterized in that** it comprises sensors for measuring at least one of the physical quantities relating to the transistor from the group comprising a temperature, a current and a voltage, and a detection module intended to detect the linear regime of the transistor based on the measurements.

17. System according to one of Claims 12 to 16, **characterized in that** the transistor is of IGBT type.
